# FASCICULE DE BREVET EUROPEEN

(11) **EP 2 640 236 B1**
(45) Date de publication et mention de la délivrance du brevet: **24.01.2018**
(21) Numéro de dépôt: 11796747.1
(22) Date de dépôt: 15.11.2011
(51) Int. Cl.: F16J 15/32, A47J 43/07

(54) **RECIPIENT DE TRAVAIL D'APPAREIL ELECTROMENAGER DE PREPARATION CULINAIRE**
ARBEITSBEHÄLTER EINER KÜCHENMASCHINE
WORK RECEPTACLE OF AN ELECTRICAL HOUSEHOLD APPLIANCE FOR FOOD PREPARATION

(30) Priorité: 16.11.2010 FR 1059428
(43) Date de publication de la demande: 25.09.2013
(73) Titulaire: SEB S.A., 69130 Ecully (FR)
(72) Inventeur: RETOUR, Stéphane, F-53470 Commer (FR); GOUPIL, Dominique, F-53640 Champeon (FR)
(74) Mandataire: Bourrières, Patrice
(86) Numéro de dépôt international: PCT/FR2011/052646
(87) Numéro de publication internationale: WO 2012/066229

(56) Documents cités:
- WO-A1-02/28248
- US-A1- 2001 002 892
- US-A1- 2002 079 393
- US-A1- 2008 198 688
- US-A1- 2008 264 270
- US-A1- 2009 064 867

## Description

La présente invention se rapporte au domaine technique général des appareils électroménagers de préparation culinaire comprenant un récipient de travail comportant un fond traversé par un arbre porte-couteaux. La présente invention se rapporte plus particulièrement à un récipient de travail dans lequel l'arbre porte-couteaux est maintenu dans le fond du récipient au moyen d'un dispositif de maintien comportant un logement recevant un roulement pour le guidage en rotation de l'arbre et comprenant des moyens pour assurer l'étanchéité du logement.

Il est connu, du brevet EP 1 375 982, un arbre porte-couteaux guidé dans le fond d'un récipient de travail au moyen d'un roulement disposé dans un logement dont l'étanchéité, au niveau des traversés de l'arbre porte-couteaux, est assurée par des garnitures d'étanchéité constituées par des joints en silicone dans lesquels sont intégrés des disques en Téflon-graphite venant au contact de l'arbre porte-couteaux. Cependant, de telles garnitures d'étanchéité multi-matières présentent l'inconvénient d'être coûteuses à fabriquer.

Il est connu de la demande de brevet US 2001/002892 un récipient de travail comportant un fond traversé par un arbre porte-couteaux guidé par un roulement, un joint étant prévu d'un côté du roulement pour assurer l'étanchéité du logement recevant le roulement. Dans ce document, le joint d'étanchéité est porté par une bague entourant le roulement et comporte une lèvre venant frotter contre l'arbre porte-couteaux. Une telle construction présente l'inconvénient de conduire à une usure rapide du joint d'étanchéité.

Il est également connu des documents US2008/198688 et US2008/264270, un récipient de travail comprenant un arbre porte-couteaux guidé en rotation par un palier, l'étanchéité du palier étant assurée au moyen d'un joint porté par l'arbre porte couteaux et disposé d'un coté du palier, le joint comportant une lèvre venant frotter contre le palier. Toutefois, une telle construction, dans laquelle le guidage de l'arbre porte-couteaux est assuré par un palier, présente l'inconvénient de ne pas fonctionner à satisfaction dans des conditions de travail extrêmes et notamment dans un environnement où la température est élevée.

Aussi, un but de la présente invention est de proposer un dispositif de maintien d'un arbre porte-couteaux dans le fond d'un récipient de travail d'appareil électroménager de préparation culinaire comprenant un roulement pour le guidage de l'arbre porte-couteaux et un dispositif d'étanchéité qui soit simple et économique à réaliser. Un autre but de la présente invention est de proposer un dispositif de maintien d'un arbre porte-couteaux qui garantisse une bonne rotation de l'arbre porte-couteaux dans un environnement pouvant présenter une température élevée.

A cet effet, l'invention se rapporte à un récipient de travail d'appareil électroménager de préparation culinaire, de type mélangeur, comportant un fond traversé par un arbre porte-couteaux, l'arbre porte-couteaux étant monté dans le fond du récipient de travail au moyen d'un dispositif de maintien comportant un logement recevant un roulement assurant un guidage en rotation de l'arbre porte-couteaux et comprenant des moyens pour assurer l'étanchéité du logement, caractérisé en ce que les moyens pour assurer l'étanchéité du logement comportent, au moins d'un côté du roulement, un joint d'étanchéité porté par l'arbre porte-couteaux venant frotter sur un palier disposé entre le joint d'étanchéité et le roulement.

Un tel récipient de travail présente l'avantage de posséder un arbre porte-couteaux qui est guidé par un roulement pouvant fonctionner dans des conditions de travail extrêmes, l'étanchéité du logement de réception du roulement étant assurée par une solution simple et économique à mettre en oeuvre.

Selon une autre caractéristique de l'invention, le diamètre de l'alésage du palier est supérieur de plus de 0.1 mm, et de préférence de plus de 0.5 mm, au diamètre extérieur de la partie de l'arbre porte-couteaux traversant le palier.

Une telle caractéristique permet de ne pas avoir de contact entre le palier et l'arbre porte-couteaux de sorte que le palier ne participe pas, en temps normal, au guidage de l'arbre porte-couteaux mais a uniquement pour fonction de créer une barrière étanche, en combinaison avec le joint d'étanchéité.

Selon encore une autre caractéristique de l'invention, le joint d'étanchéité est un joint à lèvre.

Selon une autre caractéristique de l'invention, le palier est un palier autolubrifiant fabriqué par frittage en bronze ou en alliage ferreux.

Une telle caractéristique présente l'avantage de permettre une lubrification permanente de la zone de contact entre le joint d'étanchéité et le palier qui permet d'augmenter la durée de vie du joint d'étanchéité.

Selon une autre caractéristique de l'invention, le roulement est un roulement à billes.

Selon une autre caractéristique de l'invention, la périphérie du roulement est enveloppée d'une chaussette en élastomère.

Une telle chaussette en élastomère présente l'avantage de jouer le rôle d'un silentbloc absorbant les bruits et les vibrations générés lors de la rotation de l'arbre porte-couteaux.

Selon une autre caractéristique de l'invention, les moyens pour assurer l'étanchéité du logement comportent, de chaque côté du roulement, un joint d'étanchéité porté par l'arbre venant frotter sur un palier disposé entre le joint d'étanchéité et le roulement.

Selon une autre caractéristique de l'invention, les paliers sont respectivement portés par une pièce support rapportée à l'intérieur du récipient de travail et par une bride de fixation disposée sous le fond du récipient de travail.

Selon une autre caractéristique de l'invention, le logement de réception du roulement est intégré dans la pièce support et un joint d'étanchéité est interposé entre la pièce support et le fond du récipient de travail.

L'invention concerne également un appareil électroménager de préparation culinaire comportant un boîtier moteur et un récipient de travail comprenant un fond traversé par un arbre porte-couteaux entraîné en rotation par le boîtier moteur, dans lequel le récipient de travail est tel que précédemment décrit.

Selon une autre caractéristique de l'invention, l'appareil comprend des moyens de chauffage permettant de chauffer le contenu du récipient de travail.

Selon une autre caractéristique de l'invention, le moyens de chauffage sont portés par le fond du récipient de travail.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil électroménager de préparation culinaire équipé d'un récipient de travail selon un mode particulier de réalisation de l'invention ;
- la figure 2 est une vue en coupe du récipient de travail de la figure 1 ;
- la figure 3 est une vue de détail, agrandie, du dispositif de maintien de l'arbre porte-couteaux de la figure 2.

Seuls les éléments nécessaires à la compréhension de l'invention ont été représentés. Pour faciliter la lecture des dessins, les mêmes éléments portent les mêmes références d'une figure à l'autre.

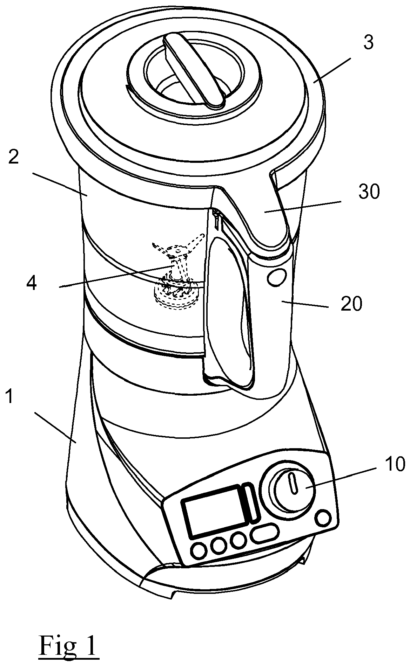

La figure 1 représente un appareil électroménager de préparation culinaire, de type mélangeur, comportant un boîtier moteur 1 supportant un récipient de travail 2 amovible renfermant un outil de mixage 4, représenté en pointillés sur cette figure.

Le boîtier moteur 1 renferme de manière connue en soi un moteur, non représenté sur les figures, pour l'entraînement en rotation de l'outil de mixage 4 et comporte une face avant munie d'un tableau de commande comprenant un bouton 10 permettant de contrôler la mise en marche et la vitesse du moteur.

De manière avantageuse, le récipient de travail 2 comporte une poignée de préhension 20 et est fermé par un couvercle 3 amovible comportant une excroissance latérale 30 venant dans le prolongement de la poignée de préhension 20 lorsque le couvercle 3 est verrouillé sur le récipient de travail 2.

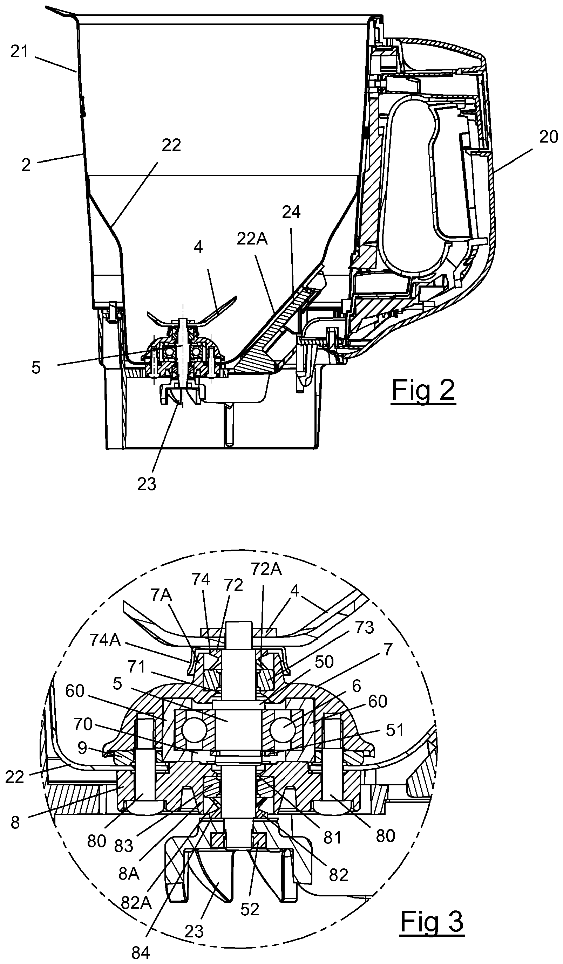

Conformément à la figure 2, le récipient de travail 2 comporte une enveloppe 21 sensiblement cylindrique, préférentiellement en métal ou en matériau transparent, comprenant une ouverture supérieure fermée par le couvercle 3 et une extrémité inférieure recevant un fond 22 métallique, réalisé avantageusement en matériau inox, maintenu par collage contre l'enveloppe 21 cylindrique.

Le fond 22 comporte une ouverture pour le passage d'un arbre 5 porte-couteaux comprenant une extrémité supérieure sur laquelle sont engagées des lames de l'outil de mixage 4 maintenues axialement sur l'arbre 5 par un aplatissement de son extrémité, et comprenant une extrémité inférieure sur laquelle est fixé un entraîneur 23 rigide venant coopérer avec un entraîneur du boîtier moteur 1 lorsque le récipient de travail 2 est disposé sur le boîtier moteur 1.

De manière préférentielle, le fond 22 du récipient de travail reçoit également une résistance chauffante 24, du type résistance blindée, qui permet de chauffer le contenu du récipient de travail 2, la résistance chauffante 24 étant disposée d'un côté de l'arbre 5 porte-couteaux, contre une paroi inclinée 22A qui est surélevée par rapport à la partie du fond 22 recevant l'arbre 5 porte-couteaux.

Conformément à la figure 3, l'arbre 5 porte-couteaux est monté dans le fond 22 du récipient de travail au moyen d'un dispositif de maintien comprenant un roulement 6 dans lequel l'arbre 5 porte-couteaux est emmanché serré, le roulement 6 étant immobilisé axialement sur l'arbre 5 entre un épaulement 50 et un circlips 51 et étant disposé dans un logement 70 d'une pièce support 7 rapportée à l'intérieur du récipient de travail 2.

De manière préférentielle, la pièce support 7 présente extérieurement la forme d'un dôme comportant une ouverture 71 centrale traversée par l'arbre 5 porte-couteaux, le logement 70 de réception du roulement 6 étant situé sous l'ouverture 71 centrale et présentant la forme d'une chambre cylindrique, coaxiale à l'ouverture 71, débouchant sur une face inférieure de la pièce support 7.

La périphérie du roulement 6 est avantageusement recouverte d'une chaussette 60, en élastomère, avant d'être emmanché dans le logement 70 de sorte que la chaussette 60 se trouve interposée entre le roulement 6 et la pièce support 7.

L'utilisation d'une telle chaussette 60 souple en élastomère permet à la fois d'atténuer les bruits générés par la rotation de l'arbre 5 et de rattraper un éventuel défaut de coaxialité entre l'entraîneur 23 et l'entraîneur correspondant du boîtier moteur 1 lorsque le récipient de travail 2 est disposé sur le boîtier moteur 1.

La pièce support 7 est fixée contre le fond 22 du récipient de travail au moyen d'une bride de fixation 8, rapportée sous le fond 22, comportant une ouverture centrale 81 traversée par l'arbre 5 porte-couteaux, la bride de fixation 8 étant maintenue par des vis 80 traversant des alésages adaptés, réalisés dans la bride de fixation 8 et dans le fond 22, pour s'engager dans des filetages de la pièce support 7 de sorte que le fond 22 se retrouve pris en sandwich entre la pièce support 7 et la bride de fixation 8, un joint d'étanchéité 9 annulaire en caoutchouc étant interposé entre le fond 22 du récipient de travail et la pièce support 7 pour garantir l'étanchéité de la liaison.

Plus particulièrement selon l'invention, l'étanchéité du logement 70 de réception du roulement 6 au niveau de la traversée de la pièce support 7 et de la bride de fixation 8 par l'arbre 5 porte-couteaux est respectivement garantie par un joint d'étanchéité 72 et par un joint d'étanchéité 82 portés par l'arbre 5 porte-couteaux, le joint d'étanchéité 72 comportant une lèvre 72A venant frotter contre un palier 73 porté par la pièce support 7 et le joint d'étanchéité 82 comportant une lèvre 82A venant frotter contre un palier 83 porté par la bride de fixation 8.

A cet effet, l'extrémité supérieure de la pièce support 7 et la face inférieure de la bride de fixation 8 comportent un manchon 7A, 8A disposé coaxialement à l'ouverture centrale 71, 81 et muni d'un alésage cylindrique au fond duquel le palier 73, 83 est emmanché serré. L'arbre 5 porte-couteaux traverse donc les paliers 73, 83 sans être en contact avec ces derniers, le diamètre extérieur de l'arbre 5 porte-couteaux à hauteur des paliers 73, 83 étant inférieur au diamètre de l'alésage intérieur des paliers de plus de 0.1 mm, et préférentiellement de l'ordre 0.6 mm.

Les joints d'étanchéité 72, 82 sont avantageusement constitués par un joint en caoutchouc à lèvre flexible, de type V-ring, et sont emmanchés sur l'arbre 5 porte-couteaux en étant disposés de telle sorte que la lèvre 72A, 82A du joint d'étanchéité vienne frotter contre la face latérale du palier 73, 83 orientée vers l'extérieur du logement 70 de réception du roulement 6.

A titre d'exemple, les deux paliers 73, 83 sont des paliers autolubrifiants fabriqués par frittage, en bronze ou en fer, les paliers 73, 83 étant imbibés d'huile avant d'être installés sur l'arbre 5 de sorte que l'huile contenue dans le palier 73, 83 assure la lubrification de la zone de frottement de la lèvre 72A, 82A du joint d'étanchéité 72, 82 sur le palier 73, 83 lors de la rotation de l'arbre 5.

Le joint d'étanchéité 72 disposé dans le manchon 7A de la pièce support 7 est maintenu axialement sur l'arbre 5 porte-couteaux par une coupelle 74 emmanchée sur l'arbre 5 porte-couteaux sous les lames de l'outil de mixage 4, la coupelle 74 comportant une jupe 74A venant recouvrir la périphérie du manchon 7A.

Le joint d'étanchéité 82 disposé dans le manchon 8A de la bride de fixation 8 est quant à lui maintenu axialement sur l'arbre 5 porte-couteaux par une rondelle 84 venant prendre appui contre la face supérieure de l'entraîneur 23, ce dernier étant fixé à l'extrémité inférieure de l'arbre 5 porte-couteaux au moyen d'un écrou 52.

Le dispositif de maintien ainsi réalisé présente l'avantage de posséder un roulement qui assure un excellent guidage de l'arbre porte-couteaux dans les conditions de températures élevées qui peuvent être atteintes lorsque la résistance de chauffage du récipient est en fonctionnement.

L'association des joints d'étanchéité avec les paliers disposés de part et d'autre du roulement présente l'avantage de constituer un dispositif d'étanchéité peu onéreux à mettre en oeuvre et possédant une bonne endurance, le palier présentant l'avantage d'assurer une lubrification automatique de la zone de contact avec le joint d'étanchéité permettant de limiter l'usure du joint d'étanchéité et d'obtenir ainsi une bonne durée de vie.

En particulier, les paliers utilisés dans le dispositif de maintien selon l'invention n'ont pas pour fonction principale de guider l'arbre porte-couteaux, étant donné le jeu important prévu entre l'arbre et le palier, ce qui permet d'éviter tout échauffement excessif des paliers pouvant conduire à une détérioration de ces derniers et du joint d'étanchéité, notamment lorsque l'arbre porte-couteaux tourne à haute vitesse et que la résistance chauffante du récipient est en fonctionnement.

Les paliers participent cependant à limiter le déplacement de l'arbre porte-couteaux lorsque des chocs se produisent sur les lames, les paliers pouvant momentanément entrer en contact avec l'arbre porte-couteaux lors de la compression ou de la flexion de la chaussette en élastomère recouvrant la périphérie du roulement.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention défini seulement par les revendications indépendantes 1,9. Ainsi, dans une variante de réalisation non représentée, l'étanchéité du logement de réception pourra être assurée par des solutions techniques différentes d'un côté ou l'autre du roulement.

Ainsi, dans une variante de réalisation non représentée, le roulement à billes pourra être remplacé par un roulement à rouleaux.

## Revendications

1. Récipient de travail (2) d'appareil électroménager de préparation culinaire, de type mélangeur, comportant un fond (22) traversé par un arbre (5) porte-couteaux, ledit arbre (5) porte-couteaux étant monté dans le fond (22) du récipient de travail (2) au moyen d'un dispositif de maintien comportant un logement (70) recevant un roulement (6) assurant un guidage en rotation de l'arbre (5) porte-couteaux et comprenant des moyens pour assurer l'étanchéité du logement (70), les moyens pour assurer l'étanchéité du logement comportant, au moins d'un côté du roulement (6), un joint d'étanchéité (72, 82), **caractérisé en ce que** le joint d'étanchéité est porté par l'arbre (5) et vient frotter sur un palier (73, 83) disposé entre le joint d'étanchéité (72, 82) et le roulement (6), ledit palier (73, 83) étant un palier autolubrifiant fabriqué par frittage en bronze ou en alliage ferreux.

2. Récipient de travail (2) selon la revendication 1, **caractérisé en ce que** le diamètre de l'alésage du palier (73, 83) est supérieur de plus de 0.1 mm, et de préférence de plus de 0.5 mm, au diamètre extérieur de la partie de l'arbre (5) porte-couteaux traversant le palier (73, 83).

3. Récipient de travail (2) selon l'une quelconque des revendications 1 à 2, **caractérisé en ce que** le joint d'étanchéité (72, 82) est un joint à lèvre.

4. Récipient de travail (2) selon l'une quelconque des revendications 1 à 3, **caractérisé en ce que** le roulement (6) est un roulement à billes.

5. Récipient de travail (2) selon l'une quelconque des revendications 1 à 4, **caractérisé en ce que** la périphérie du roulement (6) est enveloppée d'une chaussette (60) en élastomère.

6. Récipient de travail (2) selon l'une quelconque des revendications 1 à 5, **caractérisé en ce que** les moyens pour assurer l'étanchéité du logement (70) comportent, de chaque côté du roulement, un joint d'étanchéité (72, 82) porté par l'arbre (5) venant frotter sur un palier (73, 83) disposé entre le joint d'étanchéité (72, 82) et le roulement (6).

7. Récipient de travail (2) selon la revendication 6, **caractérisé en ce que** les paliers (73, 83) sont respectivement portés par une pièce support (7) rapportée à l'intérieur du récipient de travail (2) et par une bride de fixation (8) disposée sous le fond (22) du récipient de travail (2).

8. Récipient de travail (2) selon la revendication 7, **caractérisé en ce que** le logement (70) de réception du roulement (6) est intégré dans la pièce support (7) et **en ce qu'**un joint d'étanchéité (9) est interposé entre la pièce support (7) et le fond (22) du récipient de travail (2).

9. Appareil électroménager de préparation culinaire comportant un boîtier moteur (1) et un récipient de travail (2) comprenant un fond (22) traversé par un arbre (5) porte-couteaux entraîné en rotation par le boîtier moteur (1), **caractérisé en ce que** le récipient de travail (2) est conforme à l'une des revendications 1 à 8.

10. Appareil électroménager de préparation culinaire selon la revendication 9, **caractérisé en ce qu'**il comprend des moyens de chauffage (24) permettant de chauffer le contenu du récipient de travail (2).

11. Appareil électroménager de préparation culinaire selon la revendication 10, **caractérisé en ce que** le moyens de chauffage (24) sont portés par le fond (22) du récipient de travail (2)

## Patentansprüche

1. Arbeitsbehälter (2) eines Elektrohaushaltsgeräts zur Nahrungszubereitung vom Mischertyp, das einen Boden (22) aufweist, durch den eine als Messerträger ausgebildete Welle (5) läuft, wobei die als Messerträger ausgebildete Welle (5) in dem Boden (22) des Arbeitsbehälters (2) mittels einer Haltevorrichtung montiert ist, die ein Gehäuse (70) aufweist, das ein Lager (6) aufnimmt, um eine Drehführung der als Messerträger ausgebildeten Welle (5) zu gewährleisten, und Mittel aufweist, um die Dichtigkeit des Gehäuses (70) sicherzustellen, wobei die Mittel, um die Dichtigkeit des Gehäuses sicherzustellen, mindestens auf einer Seite des Lagers (6) eine Dichtung (72, 82) aufweisen, **dadurch gekennzeichnet, dass** die Dichtung von der Welle (5) getragen wird und an einem Achslager (73, 83) reibt, das zwischen der Dichtung (72, 82) und dem Lager (6) angeordnet ist, wobei das Lager (73, 83) ein selbstschmierendes Lager ist, das durch Sintern aus Bronze oder aus Eisenlegierungen hergestellt ist.

2. Arbeitsbehälter (2) nach Anspruch 1, **dadurch gekennzeichnet, dass** der Durchmesser der Bohrung des Achslagers (73, 83) größer als 0,1 mm, und vorzugsweise größer als 0,5 mm, am äußeren Durchmesser des Abschnitts der als Messerträger ausgebildeten Welle (5) ist, die durch das Achslager (73, 83) läuft.

3. Arbeitsbehälter (2) nach einem der Ansprüche 1 bis 2, **dadurch gekennzeichnet, dass** die Dichtung (72, 82) eine Lippendichtung ist.

4. Arbeitsbehälter (2) nach einem der Ansprüche 1 bis 3, **dadurch gekennzeichnet, dass** das Lager (6) ein Kugellager ist.

5. Arbeitsbehälter (2) nach einem der Ansprüche 1 bis 4, **dadurch gekennzeichnet, dass** der Umfang des Lagers (6) von einem Stutzen (60) aus Elastomer umhüllt ist.

6. Arbeitsbehälter (2) nach einem der Ansprüche 1 bis 5, **dadurch gekennzeichnet, dass** die Mittel, um die Dichtigkeit des Gehäuses (70) sicherzustellen, auf jeder Seite des Lagers eine Dichtung (72, 82) aufweisen, die von der Welle (5) getragen wird, wobei sie an dem Achslager (73, 83) reibt, das zwischen der Dichtung (72, 82) und dem Lager (6) angeordnet ist.

7. Arbeitsbehälter (2) nach Anspruch 6, **dadurch gekennzeichnet, dass** die Achslager (73, 83) jeweils von einem Stützteil (7), das innerhalb des Arbeitsbehälters (2) angestückelt ist, und von einem Befestigungsflansch (8) getragen werden, der unter dem Boden (22) des Arbeitsbehälters (2) angeordnet ist.

8. Arbeitsbehälter (2) nach Anspruch 7, **dadurch gekennzeichnet, dass** das Gehäuse (70) zur Aufnahme des Lagers (6) in dem Trägerteil (7) integriert ist, und dass eine Dichtung (9) zwischen dem Stützteil (7) und dem Boden (22) des Arbeitsbehälters (2) angeordnet ist.

9. Elektrohaushaltsgerät zur Nahrungszubereitung, das ein Motorgehäuse (1) und einen Arbeitsbehälter (2) aufweist, der einen Boden (22) aufweist, der von eine als Messerträger ausgebildeten Welle (5) durchlaufen wird, die von dem Motorgehäuse (1) in Drehung versetzt wird, **dadurch gekennzeichnet, dass** der Arbeitsbehälter (2) gemäß einem der Ansprüche 1 bis 8 ist.

10. Elektrohaushaltsgerät zur Nahrungszubereitung nach Anspruch 9, **dadurch gekennzeichnet, dass** es Heizmittel (24) umfasst, die es ermöglichen, den Inhalt des Arbeitsbehälters (2) zu erhitzen.

11. Elektrohaushaltsgerät zur Nahrungszubereitung nach Anspruch 10, **dadurch gekennzeichnet, dass** die Heizmittel (24) von dem Boden (22) des Arbeitsbehälters (2) getragen werden.

## Claims

1. Work receptacle (2) of an electrical household appliance for food preparation, of the mixer type, comprising a bottom (22) crossed by a blade shaft (5), said blade shaft (5) being assembled in the bottom (22) of the work receptacle (2) by means of a holding device comprising a housing (70) receiving a roller (6) ensuring the blade shaft (5) is guided in rotation and comprising means to ensure the housing (70) is sealed, the means to ensure the housing is sealed comprising, at least on one side of the roller (6), a gasket (72, 82), **characterised in that** the gasket is held by the shaft (5) and sinters on a bearing (73, 83) arranged between the gasket (72, 82) and the roller (6), said bearing (73, 83) being a self-lubricating bearing made by sintering in bronze or iron alloy.

2. Work receptacle (2) according to claim 1, **characterised in that** the diameter of the bore of the bearing (73, 83) is more than 0.1mm, and preferably more than 0.5mm, to the exterior diameter of the part of the blade shaft (5) crossing the bearing (73, 83).

3. Work receptacle (2) according to any one of the claims 1 to 2, **characterised in that** the gasket (72, 82) is a lip seal.

4. Work receptacle (2) according to any one of the claims 1 to 3, **characterised in that** the roller (6) is a ball bearing.

5. Work receptacle (2) according to any one of the claims 1 to 4, **characterised in that** the periphery of the roller (6) is wrapped with an elastomer sleeve (60).

6. Work receptacle (2) according to any one of the claims 1 to 5, **characterised in that** the means to ensure the housing (70) is sealed, comprise, on each side of the roller, a gasket (72, 82) held by the shaft (5) sintering on a bearing (73, 83) arranged between the gasket (72, 82) and the roller (6).

7. Work receptacle (2) according to claim 6, **characterised in that** the bearings (73, 83) are respectively held by a support component (7) brought back inside the work receptacle (2) and by a mounting flange (8) arranged under the bottom (22) of the work receptacle (2).

8. Work receptacle (2) according to claim 7, **characterised in that** the housing (70) receiving the roller (6) is integrated in the support component (7) and **in that** a gasket (9) is interposed between the support component (7) and the bottom (22) of the work receptacle (2).

9. Electrical household appliance for food preparation comprising a motor casing (1) and a work receptacle (2) comprising a bottom (22) crossed by a blade shaft (5) rotated by the motor casing (1), **characterised in that** the work receptacle (2) conforms with one of the claims 1 to 8.

10. Electrical household appliance for food preparation according to claim 9, **characterised in that** it comprises heating means (24) enabling to heat the contents of the work receptacle (2).

11. Electrical household appliance for food preparation according to claim 10, **characterised in that** the heating means (24) are held by the bottom (22) of the work receptacle (2).
